# NEUE EUROPÄISCHE PATENTSCHRIFT

(11) **EP 1 203 436 B2**
(45) Veröffentlichungstag und Bekanntmachung des Hinweises auf die Entscheidung über den Einspruch: **11.06.2008**
(45) Hinweis auf die Patenterteilung: 07.05.2003
(21) Anmeldenummer: 00949037.6
(22) Anmeldetag: 04.08.2000
(51) Int. Cl.: H02K 1/27, H02K 29/08

(54) **ELEKTRISCHE AXIALFLUSSMASCHINE**
ELECTRIC AXIAL FLOW MACHINE
MACHINE ELECTRIQUE A FLUX AXIAL

(30) Priorität: 09.08.1999 CH 146999
(43) Veröffentlichungstag der Anmeldung: 08.05.2002
(73) Patentinhaber: Perm Motor GmbH, 79296 Breisach (DE)
(72) Erfinder: KNÖRZER, Karl-Heinz, D-79235 Vogtsburg/Achkarren (DE); VON KÖNIG, Herbert, D-37520 Osterode am Harz (DE)
(74) Vertreter: Bollhalder, Renato
(86) Internationale Anmeldenummer: PCT/CH2000/000417
(87) Internationale Veröffentlichungsnummer: WO 2001/011755

(56) Entgegenhaltungen:
- DE-A- 4 442 869
- US-A- 4 629 920
- US-A- 4 864 175
- US-A- 5 619 087
- PATENT ABSTRACTS OF JAPAN vol. 008, no. 123 (E-249), 8. Juni 1984 (1984-06-08) & JP 59 035556 A (MATSUSHITA DENKI SANGYO KK), 27. Februar 1984 (1984-02-27)
- Seite 191/192 aus "Fertigungs- und stoffgerechtes Gestalten in der Feinwerktechnik", von K.-H. Sieker und K. Rabe, 2. Auflage, Springer-Verlag, 1968
- Auszug aus der Brockhaus-Enzyklopaedie, Stichwort "Formschluss"

## Beschreibung

Die vorliegende Erfindung bezieht sich auf eine elektrische Axialflussmaschine, wie sie im Oberbegriff des unabhängigen Patentanspruchs 1 definiert ist.

Unter elektrischer Axialflussmaschine wird ein Motor oder Generator mit einem Rotor und einem Stator verstanden, bei dem der Magnetfluss zwischen Rotor und Stator parallel zur Drehachse des Rotors erfolgt. Derartige Axialflussmaschinen sind auch unter den Bezeichnungen bürstenloser Gleichstrommotor, permanenterregter Synchronmotor oder Scheibenläufermotor bekannt.

Ein effizienter bürstenloser Gleichstrommotor mit einem um eine Welle angeordneten eisenlosen Rotor mit Permanentmagnecen ist beispielsweise in der DE-U-298 16 561 beschrieben. Bei diesem Gleichstrommotor sind beidseits des scheibenförmigen Rotors je eine Elektromagneteinheit als Stator parallel zum Rotor um die Welle angeordnet. Der Rotor besitzt kreisförmig um die Welle herum angeordnete Permanentmagnete, die beispielsweise in einen Kunststoff eingebettet sind und deren Magnetisierungsrichtung parallel zur Welle verläuft. Jeweils zwei benachbarte Permanentmagnete weisen eine umgekehrte Magnetisierungsrichtung auf. Der eine Stator ist mit ersten elektromagnetischen Bereichen und der andere Stator ist mit zweiten elektromagnetischen Bereichen versehen, deren Anzahl der Anzahl der Permanentmagnete entspricht, wobei zwei benachbarte erste elektromagnetische Bereiche und zwei benachbarte zweite elektromagnetische Bereiche jeweils umgekehrte Magnetisierungsrichtungen haben, die abwechselnd geändert werden. Die ersten und zweiten elektromagnetischen Bereiche sind zueinander versetzt angeordnet und weisen eine Phasendifferenz von 90° auf.

Ein Nachteil dieses Gleichstrommotors besteht darin, dass der Rotor aufgrund seiner Beschaffenheit relativ instabil und daher nur für langsame Drehungen geeignet ist.

Aus der US-A-5 619 087 ist eine elektrische Axialflussmaschine bekannt, die mindestens zwei eisenlose scheibenförmige Rotoren mit relativ kleinen, stabförmigen Permanentmagneten umfasst, die in einen faser- oder gewebearmierten Kunststoff eingebettet sind. Mehrere nebeneinander angeordnete gleich magnetisierte Permanentmagnete formen jeweils eine Gruppe, die einen magnetischen Pol bildet. Dadurch, dass anstatt mehrerer grosser viele relativ kleine Permanentmagnete im Kunststoff angeordnet sind, ist die effektive Magnetfläche und somit der Magnetfluss reduziert, was durch die Verwendung von mindestens zwei Rotoren kompensiert wird. Ausserdem bereitet die Verankerung der vielen einzelnen Permanentmagnete im Kunststoff Fertigungs- und Festigkeitsprobleme.

Angesichts der Nachteile der bisher bekannten Axialflussmotoren und -generatoren liegt der Erfindung die folgende Aufgabe zugrunde. Zu schaffen ist eine elektrische Axialflussmaschine der eingangs erwähnten Art, deren Rotor möglichst masse- und trägheitsarm, aber trotzdem stabil und auch für hohe Drehzahlen geeignet ist.

Diese Aufgabe wird durch die erfindungsgemässe elektrische Axialflussmaschine gelöst, wie sie im unabhängigen Patentanspruch 1 definiert ist. Patentanspruch 10 bezieht sich auf ein erfindungsgemässes Verfahren zur Herstellung eines Rotors für eine derartige elektrische Axialflussmaschine. Bevorzugte Ausführungsvarianten ergeben sich aus den abhängigen Patentansprüchen.

Das Wesen der Erfindung besteht darin, dass bei einer elektrischen Axialflussmaschine mit einem an einer Maschinenwelle angeordneten eisenlosen scheibenförmigen Rotor, der Permanentmagnete aufweist, die in einen faser- oder gewebearmierten Kunststoff eingebettet sind, die Permanentmagnete jeweils formschlüssig mit dem umgebenden faser- oder gewebearmierten Kunststoff verbunden sind. Die Maschinenwelle ist mitteln zweier Flansche dieser Maschinenwelle allein durch den Kunststoffstabil mit dem Rotor verbunden, wobei der Kunststoff zusammen mit den Permanentmagneten und der Maschinenwelle eine formstabile Einheit bildet. Beidseits neben dem Rotor ist jeweils ein Stator angeordnet.

Bereits dadurch, dass der Kunststoff faser- oder gewebearmiert ist, hat der Rotor eine hohe Steifigkeit. Diese wird noch dadurch erhöht, dass die Permanentmagnete jeweils formschlüssig mit dem umgebenden faser- oder gewebearmierten Kunststoff verbunden sind. Die Maschinenswelle ist mittels zweier Flansche diesen Maschinenwelle allein durch den Kunststoff stabil mit dem Rotor verbunden, wobei der Kunststoff zusammen mit den Permanentmagneten und der Maschinenwelle eine formstabile Einheit bildet. Letzteres kann durch geeignetes Anordnen der Permanentmagnete und der Maschinenwelle und Giessen des faser- oder gewebearmierten Kunststoffs erreicht werden. Durch die erfindungsgemässe Ausbildung des Rotors dienen die steifen Permanentmagnete gleichzeitig als Versteifungselemente, wobei durch die formschlüssige Verbindung mit dem umgebenden Kunststoff gewährleistet ist, dass sich die Permanentmagnete nicht lösen.

Vorteilhafterweise sind mehrere Permanentmagnete kreisförmig um die Maschinenwelle herum angeordnet und erstreckt sich der Kunststoff, insbesondere ein Duroplast, zwischen den Permanentmagneten insgesamt über mindestens 10%, vorzugsweise zwischen 15% und 20%, des Kreises. Durch ein derartiges Anordnen und Einbetten der Permanentmagnete kann der Rotor im Hinblick auf Festigkeit und Effizienz optimal ausgebildet werden.

Im folgenden wird die erfindungsgemässe Axialflussmaschine unter Bezugnahme auf die beigefügten Zeichnungen anhand eines Ausführungsbeispiels detaillierter beschrieben. Es zeigen:
- Fig. 1 -: eine erfindungsgemässe Axialflussmaschine in einer Seitenansicht;
- Fig. 2 -: die Axialflussmaschine in einer teilweisen Schnittansicht gemäss der Linie E-E in Fig. 1;
- Fig. 3 -: den Rotor mit Maschinenwelle und mit Mitteln zur Ermittlung der Magnetpollage des Rotors in einer Seitenansicht;
- Fig. 4 -: den Rotor inklusive Maschinenwelle in einer teilweisen Schnittansicht gemäss der Linie A-A in Fig. 3;
- Fig. 5 -: eine vergrösserte Detailansicht des Rotors von Fig. 4;
- Fig. 6 -: eine Draufsicht auf einen segmentierten Permanentmagnet;
- Fig. 7 -: eine Schnittansicht des segmentierten Permanentmagneten gemäss der Linie C-C in Fig. 6;
- Fig. 8 -: einen Permanentmagnet mit einer ersten speziellen Kontur zur formschlüssigen Verbindung mit dem umgebenden Kunststoff;
- Fig. 9 -: einen Permanentmagnet mit einer zweiten speziellen Kontur zur formschlüssigen Verbindung mit dem umgebenden Kunststoff;

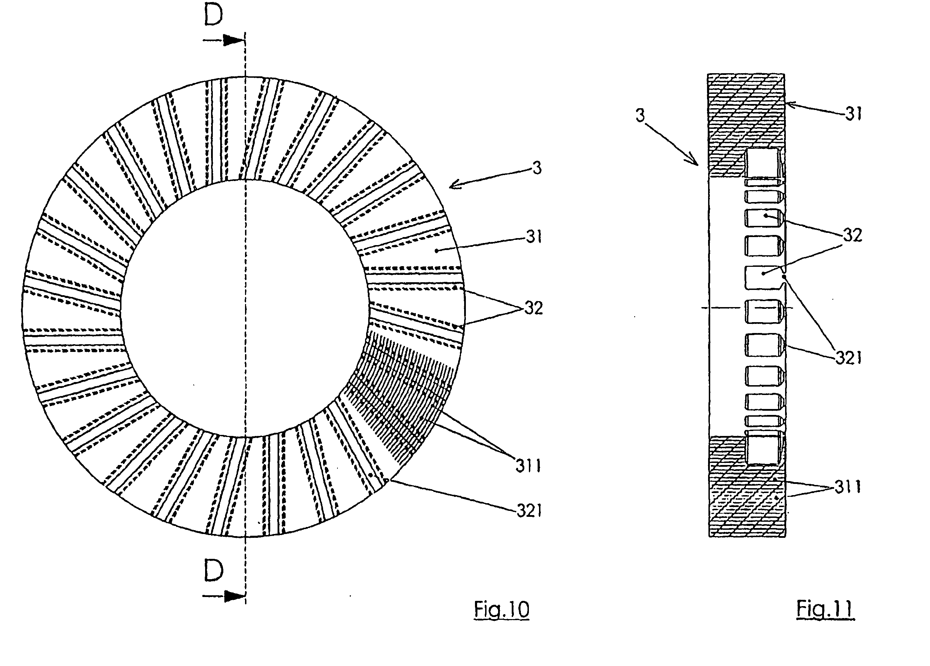

- Fig. 10 -: einen Stator in einer Seitenansicht; und
- Fig. 11 -: eine Schnittansicht des Stators gemäss der Linie D-D in Fig. 10.

### Figuren 1 und 2

Die dargestellte erfindungsgemässe Axialflussmaschine umfasst einen scheibenförmigen Rotor 1, der fest mit einer Maschinenwelle 2 verbunden ist und Permanentmagnete 11 aufweist, die in einen faserarmierten Kunststoff 12, beispielsweise einen Duroplast, eingebettet sind. Beidseits des Rotors 1 ist jeweils parallel zu diesem je ein ringförmiger Stator 3 bzw. 4 angeordnet, der jeweils an einem Lagerschild 6 befestigt ist. Die Statoren 3, 4 weisen jeweils ein ringförmiges Joch 31 bzw. 41 mit Nuten 32 bzw. 42 an ihren dem Rotor 1 zugewandten Seiten auf, in denen Mehrphasenwicklungen 33 bzw. 43 geführt sind, die äussere Wicklungsköpfe 331 bzw. 431 besitzen. Die Lagerschilde 6 sind vorzugsweise aus Aluminium und weisen ausserdem Versteifungs- und Kühlrippen 63 auf, so dass die erzeugte Wärme gut abgeführt wird. Ausnehmungen 64 in den Lagerschilden 6 haben zum Zweck, das Gewicht zu reduzieren. Zur Montage der Lagerschilde 6 sind Bolzenlöcher 61 vorgesehen, während Gewindelöcher 62 zu ihrer Befestigung an einem nicht dargestellten Maschinenteil, z.B. einem Getriebe, dienen. Die Lagerschilde 6 und ein ringförmiger Gehäuseteil 8 bilden zusammen ein Gehäuse für den Rotor 1 und die Statoren 3, 4. Die Maschinenwelle 2 ist über Kugellager 7 drehbar an den Lagerschilden 6 gelagert.

Die beiden Statoren 3, 4 sind in Umfangsrichtung elektrisch um 180° zueinander versetzt, so dass die entsprechenden sich in Umfangsrichtung im Rotor 1 ergebenden Magnetflüsse gegenläufig orientiert sind und sich somit faktisch zumindest grösstenteils aufheben. Dadurch ist es möglich, auf ein Eisen im Rotor 1 zu verzichten.

Für die gesamte weitere Beschreibung gilt folgende Festlegung. Sind in einer Figur zum Zweck zeichnerischer Eindeutigkeit Bezugszeichen enthalten, aber im unmittelbar zugehörigen Beschreibungstext nicht erwähnt, oder umgekehrt, so wird auf deren Erläuterung in vorangehenden Figurenbeschreibungen Bezug genommen.

### Figuren 3 bis 5

Erfindungsgemäss bilden der Rotor 1 und die Maschinenwelle 2 eine formstabile Einheit. Der eisenlose scheibenförmige Rotor 1 weist acht kreisförmig um die Maschinenwelle 2 herum angeordnete Permanentmagnete 11 auf, die in den faserarmierten Kunststoff 12 eingebettet sind. Der faserarmierte Kunststoff 12 erstreckt sich zwischen den Permanentmagneten 11 insgesamt über zwischen etwa 15% und 20% des Kreises, und zwar so, dass gleichmässige Stege gebildet werden. Zwischen den mechanisch sehr steifen Permanentmagneten 11 ist so genügend faserarmierter Kunststoff 12 vorhanden, dass der Rotor 1 stabil ist, und es kann bei höchster Fertigungsökonomie ein Rotor 1 mit minimalstem Massenträgheitsmoment erreicht werden.

Auch die Maschinenwelle 2 ist in einem mittleren Bereich in den faserarmierten Kunststoff 12 eingebettet, wobei zwei Flansche 21 und 22 für eine stabile Verbindung zwischen Rotor 1 und Maschinenwelle 2 sorgen.

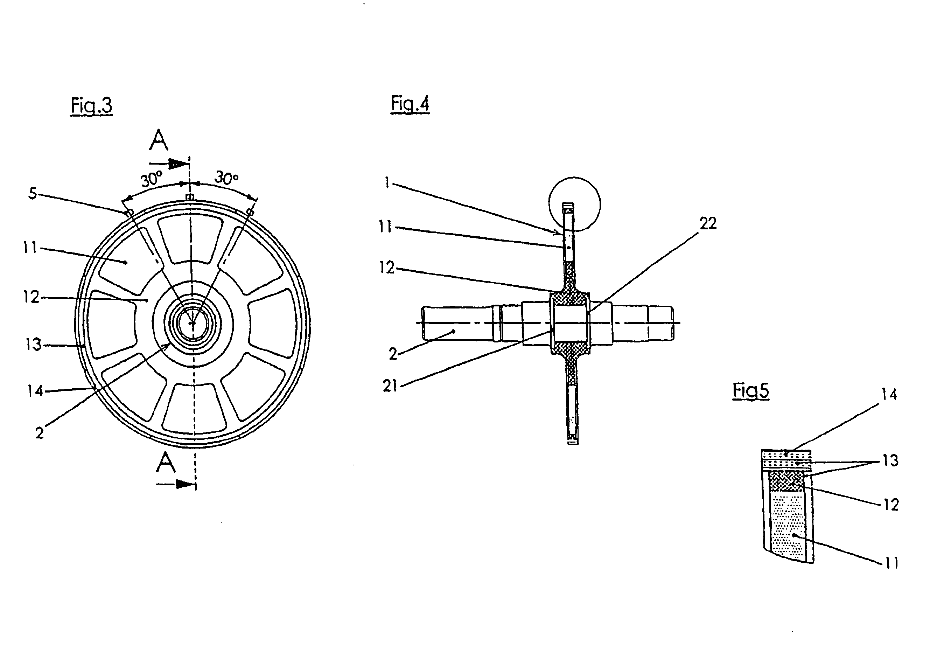

Zur Aufnahme der Fliehkräfte ist am äusseren Umfang des Rotors 1 eine Versteifungsbandage 13 angebracht, die vorimprägniertes Fasermaterial umfasst, das vorzugsweise Glas-, Kohle- oder Kevlarfasern enthält, die zu einem grossen Teil in Umfangsrichtung ausgerichtet sind. Die Versteifungsbandage 13 ist breiter als die Permanentmagnete 11 und der faserarmierte Kunststoff 12, was insbesondere in Fig. 5 deutlich erkennbar ist. Mit Vorteil sind zur Versteifung auch der faserarmierte Kunststoff 12 und die Permanentmagnete 11 sich von innen nach aussen verdickend ausgebildet.

Aussen um die Versteifungsbandage 13 herum ist ein Magnetband 14 aufgeklebt, das eine radial magnetisierte Folge von Magnetpolen bildet, die jeweils entsprechend den im faserarmierten Kunststoff 12 eingebetteten Permanentmagneten 11 angeordnet sind, wobei aber 100% des Umfangs überdeckt werden. Dieses Magnetband 14 ermöglicht es, die Magnetpollage des Rotors 1 an der Peripherie mittels dreier ortsfester Hallsonden 5 zu ermitteln. Die drei Hallsonden 5 sind in Umfangsrichtung je 30° voneinander beabstandet und beispielsweise auf einer gedruckten Schaltung angeordnet, die am Gehäuseteil 8 befestigt ist. Die ermittelte Magnetpollage erlaubt es, den Zündwinkel für die Mehrphasenwicklungen 33, 43 der Statoren 3, 4 optimal einzustellen.

Die Permanentmagnete 11 bestehen vorzugsweise aus gesintertem Magnetmaterial, beispielsweise NdFeB, mit einer Biegefestigkeit von ungefähr 270 N/mm² und einem E-Modul von ungefähr 150 kN/mm². Der faserarmierte Kunststoff 12 ist z.B. ein Epoxidharz oder ein Imidharz mit Glasfaserarmierung. Die erzielten mechanischen Festigkeitswerte liegen auch hier im Bereich von Stahl 37. Die Temperaturfestigkeit liegt für das Epoxidharz bei etwa 200 °C und für das Imidharz bei etwa 250 °C. Zur besseren Wärmedehnung und Wärmeleitung können dem Harz noch zusätzlich Mineralstoffe zugefügt werden.

Zur Herstellung des Rotors 1 werden die Maschinenwelle 2 und die Permanentmagnete 11 in einer Form angeordnet und anschliessend der vorgeheizte faserarmierte Kunststoff unter Druck in die Form, die beheizt wird, gegossen. Das Eingiessen des faserarmierten Kunststoffs erfolgt je nach Harz bei einer Temperatur von mindestens 200 °C bzw. mindestens 250 °C und unter einem Druck von 500 - 1500 bar. Dabei kommt es zu einer Plastifizierung, die ein lückenloses Füllen der Form sowie einen guten Formschluss mit den Permanentmagneten 11 und der Maschinenwelle 2 gewährleistet.

### Figuren 6 und 7

Die Permanentmagnete 11 umfassen beim vorliegenden Ausführungsbeispiel jeweils in Umfangsrichtung nebeneinander drei separate Magnetsegmente 111. Dadurch können die Wirbelstromverluste verringert werden. Die Magnetsegmente 111 sind vorzugsweise mittels eines Metallklebers verbunden, können aber auch nur vom faserarmierten Kunststoff 12 zusammengehalten werden.

### Figuren 8 und 9

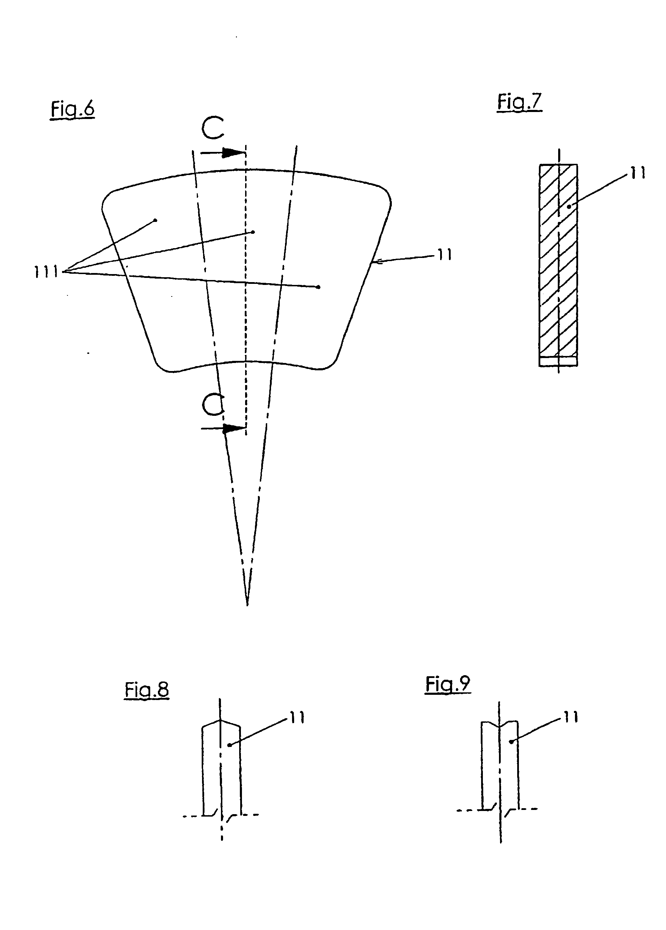

Da bei hohen Drehzahlen und relativ kleinen Luftspalten zwischen dem Rotor 1 und den Statoren 3, 4 eine grosse Eigensteifigkeit des Rotors 1 unerlässlich ist, sind die Permanentmagnete 11 jeweils formschlüssig mit dem umgebenden faserarmierten Kunststoff 12 verbunden. In den Figuren 8 und 9 sind zwei mögliche Magnetkonturen dargestellt, die geeignet sind, um die auftretenden Scherkräfte aufzufangen.

Beim dargestellten Rotor 1 kann auf die beidseitige Anbringung von magnetisch leitfähigen Blechen zum Halten der Permanentmagnete 11 oder eine anders geartete Sandwichkonstruktion verzichtet werden, wodurch die Massenträgheit, die Menge an Magnetmaterial sowie die Oberflächenverluste niedrig gehalten und unerwünschte Streupfade zwischen benachbarten Permanentmagneten 11 vermieden werden können.

### Figuren 10 und 11

Der Aufbau der beiden Statoren 3, 4 wird nachfolgend am Beispiel des Stators 3 erläutert. Der Stator 3 umfasst ein ringförmiges Joch 31, in dem ungefähr radial von innen nach aussen sich erstreckende Nuten 32 angebracht sind. Das Joch 31 setzt sich aus mehreren Lagen 311 hochwertigem Dynamoblech zusammen, die beim Nutenstanzen zu Paketen gerollt und anschliessend durch einen Schweisspunkt verbunden werden. Die Nuten 32 sind im Innern des Jochs 31 relativ breit, weisen aber zum Rotor 1 hin eine relativ schmale Öffnung 321 auf.

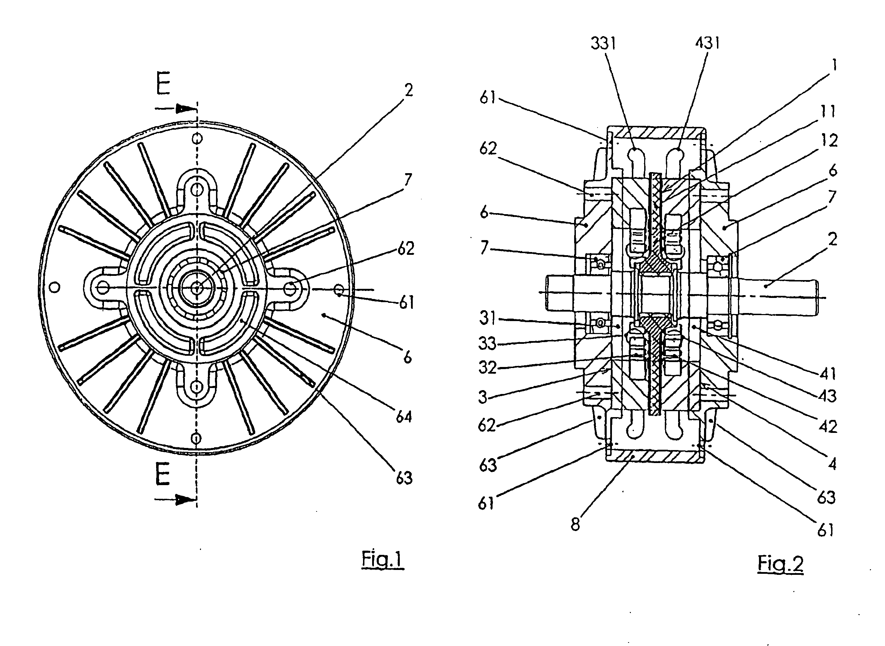

Durch die Nuten 32 sind, wie in Figur 2 dargestellt, Mehrphasenwicklungen 33, beispielsweise Dreiphasenwicklungen, geführt. Durch die Unterbringung der Mehrphasenwicklungen 33 in den Nuten 32 kann der Stator 3 nahe an die Permanentmagnete 11 des Rotors 1 herangeführt werden, d.h. es ergibt sich ein sehr kleiner Luftspalt, der einen sehr hohen magnetischen Fluss zur Folge hat und damit eine sehr grosse Leistungsdichte ermöglicht.

Aufgrund einer Schränkung der Nuten 32 in Umfangsrichtung und gegenüber den Permanentmagneten 11 des Rotors 1 können Rastmomente und Geräusche minimiert werden.

Zu der vorbeschriebenen Axialflussmaschine sind weitere konstruktive Variationen realisierbar. Hier ausdrücklich erwähnt seien noch:
- Die Ermittlung der Magnetpollage des Rotors 1 muss nicht unbedingt mittels des Magnetbands 14 und den Hallsonden 5 erfolgen. Denkbar ist unter anderem auch eine optische Abtastung von hellen und dunklen Bereichen an der Peripherie des Rotors 1.
- Anstatt die Nuten 32 und damit die darin geführten Mehrphasenwicklungen 33 zu schränken, können auch die Permanentmagnete 11 geschränkt werden.
- Der Kunststoff 12 des Rotors 1 kann anstatt faserarmiert auch gewebearmiert sein.

## Patentansprüche

1. Elektrische Axialflussmaschine mit einem an einer Maschinenwelle (2) angeordneten eisenlosen scheibenförmigen Rotor (1), der Permanentmagnete (11) aufweist, die in einen faser- oder gewebearmierten Kunststoff (12) eingebettet sind, und beidseits neben dem Rotor (1) je einem Stator (3, 4), **dadurch gekennzeichnet, dass** die Permanentmagnete (11) jeweils formschlüssig mit dem umgebenden faser- oder gewebearmierten Kunststoff (12) verbunden sind und die Maschinenwelle (2) mittels zweier Flansche (21,22) dieser Maschinenwelle (2) allein durch den Kunststoff (12) stabil mit dem Rotor (1) verbunden ist und wobei der Kunststoff (12) zusammen mit den Permanentmagneten (11) und der Maschinenwelle (2) eine formstabile Einheit bildet.

2. Elektrische Axialflussmaschine nach Anspruch 1, **dadurch gekennzeichnet, dass** mehrere Permanentmagnete (11) kreisförmig um die Maschinenwelle (2) herum angeordnet sind und sich der faser- oder gewebearmierte Kunststoff (12), insbesondere ein Duroplast, zwischen den Permanentmagneten (11) insgesamt über mindestens 10%, vorzugsweise zwischen 15% und 20%, des Kreises erstreckt.

3. Elektrische Axialflussmaschine nach Anspruch 1 oder 2, **dadurch gekennzeichnet, dass** der Rotor (1) am äusseren Umfang oder in der Nähe des äusseren Umfangs eine Versteifungsbandage (13) aufweist, die vorimprägniertes Fasermaterial umfasst, das vorzugsweise Glas-, Kohle- oder Kevlarfasern enthält, und vorzugsweise der Rotor (1) zur Versteifung sich von innen nach aussen verdickend ausgebildet ist.

4. Elektrische Axialflussmaschine nach einem der Ansprüche 1 bis 3, **dadurch gekennzeichnet, dass** sie Mittel zur Ermittlung der Magnetpollage des Rotors (1) aufweist, die vorzugsweise ein am äusseren Umfang des Rotors (1) angeordnetes Magnetband (14), das eine radial magnetisierte Folge von Magnetpolen bildet, die jeweils entsprechend den im faser- oder gewebearmierten Kunststoff (12) eingebetteten Permanentmagneten (11) angeordnet sind, und mit diesen zusammenwirkende ortsfest angeordnete Hallsonden (5) umfassen.

5. Elektrische Axialflussmaschine nach einem der Ansprüche 1 bis 4, **dadurch gekennzeichnet, dass** der faseroder gewebearmierte Kunststoff (12) ein Epoxidharz oder ein Imidharz mit Glasfaserarmierung und vorzugsweise zur besseren Wärmedehnung und Wärmeleitung zusätzlich Mineralstoffe umfasst.

6. Elektrische Axialflussmaschine nach einem der Ansprüche 1 bis 5, **dadurch gekennzeichnet, dass** die Permanentmagnete (11) jeweils in Umfangsrichtung nebeneinander mindestens zwei separate Magnetsegmente (111) umfassen, die vorzugsweise mittels eines Metallklebers verbunden sind.

7. Elektrische Axialflussmaschine nach einem der Ansprüche 1 bis 6, **dadurch gekennzeichnet, dass** die Statoren (3, 4) jeweils ein ringförmiges Joch (31, 41) umfassen, in dem ungefähr radial von innen nach aussen sich erstreckende Nuten (32, 42) angebracht sind, durch die Mehrphasenwicklungen (33, 43) geführt sind.

8. Elektrische Axialflussmaschine nach einem der Ansprüche 1 bis 7, **dadurch gekennzeichnet, dass** die Permanentmagnete (11) oder die Nuten (32, 42) in Umfangsrichtung geschränkt sind.

9. Elektrische Axialflussmaschine nach einem der Ansprüche 1 bis 8, **dadurch gekennzeichnet, dass** die beiden Statoren (3, 4) in Umfangsrichtung elektrisch um 180° zueinander versetzt sind, so dass die entsprechenden Magnetflüsse in Umfangsrichtung im Rotor (1) gegenläufig orientiert sind und sich somit faktisch zumindest grösstenteils aufheben.

10. Verfahren zur Herstellung eines Rotors (1) für eine elektrische Axialflussmaschine nach einem der Ansprüche 1 bis 9, **dadurch gekennzeichnet, dass** eine Maschinenwelle (2) und Permanentmagnete (11) in einer Form angeordnet werden und anschliessend ein vorgeheizter faser- oder gewebearmierter Kunststoff unter Druck in die Form, die beheizt wird, gegossen wird.

11. Verfahren nach Anspruch 10, **dadurch gekennzeichnet, dass** das Eingiessen des faser- oder gewebearmierten Kunststoffs bei einer Temperatur von mindestens 200 °C und unter einem Druck von 500 - 1500 bar erfolgt.

## Claims

1. An electric axial flow machine with an ironless disk-shaped rotor (1) which is arranged on a machine shaft (2) and has permanent magnets (11) which are embedded in a fiber- or fabric-reinforced plastic (12), and on both sides next to the rotor (1) in each case a stator (3, 4), **characterized in that** the permanent magnets (11) are each joined with a positive fit to the surrounding fiber- or fabric-reinforced plastic (12), and the machine shaft (2) by means of two flanges (21, 22) of this machine shaft (2) is stably connected with the rotor (1) solely through the plastic (12), and wherein the plastic (12) together with the permanent magnets (11) and the machine shaft (2) forms a dimensionally stable unit.

2. The electric axial flow machine as claimed in claim 1, **characterized in that** a plurality of permanent magnets (11) are arranged in a circular manner around the machine shaft (2) and the fiber- or fabric-reinforced plastic (12), in particular a thermosetting material, extends between the permanent magnets (11) altogether over at least 10%, preferably between 15% and 20%, of the circle.

3. The electric axial flow machine as claimed in claim 1 or 2, **characterized in that** the rotor (1) has on the outer circumference or in the vicinity of the outer circumference a stiffening band (13), which comprises preimpregnated fibrous material, which preferably contains glass, carbon or Kevlar fibers, and, for stiffening purposes, the rotor (1) is preferably formed such that it becomes thicker from the inside outward.

4. The electric axial flow machine as claimed in one of claims 1 to 3, **characterized in that** it has means for determining the magnetic pole position of the rotor (1), which preferably comprise a magnetic strip (14) which is arranged on the outer circumference of the rotor (1) and forms a radially magnetized series of magnetic poles, which are respectively arranged in a way corresponding to the permanent magnets (11) embedded in the fiber- or fabric-reinforced plastic (12), and fixed-in-place Hall probes (5) interacting with said magnetic poles.

5. The electric axial flow machine as claimed in one of claims 1 to 4, **characterized in that** the fiber- or fabric-reinforced plastic (12) comprises an epoxy resin or an imide resin with glass fiber reinforcement and preferably, for better thermal expansion and thermal conductivity, additionally comprises mineral substances.

6. The electric axial flow machine as claimed in one of claims 1 to 5, **characterized in that** the permanent magnets (11) respectively comprise at least two separate magnet segments (111) next to one another in the circumferential direction, which are preferably joined by means of a metal adhesive.

7. The electric axial flow machine as claimed in one of claims 1 to 6, **characterized in that** the stators (3, 4) each comprise an annular yoke (31, 41), in which slots (32, 42) extending approximately radially from the inside outward have been made, through which slots multi-phase windings (33, 43) are led.

8. The electric axial flow machine as claimed in one of claims 1 to 7, **characterized in that** the permanent magnets (11) or the slots (32, 42) are transposed in the circumferential direction.

9. The electric axial flow machine as claimed in one of claims 1 to 8, **characterized in that** the two stators (3, 4) are electrically offset in relation to one another in the circumferential direction by 180°, with the result that the corresponding magnetic fluxes in the circumferential direction in the rotor (1) are oppositely oriented and consequently cancel one another out in practice, at least for the most part.

10. A method for producing a rotor (1) for an electric axial flow machine as claimed in one of claims 1 to 9, **characterized in that** a machine shaft (2) and permanent magnets (11) are arranged in a mold and a pre-heated fiber- or fabric-reinforced plastic is subsequently poured under pressure into the mold, which is heated.

11. The method as claimed in claim 10, **characterized in that** the pouring-in of the fiber- or fabric-reinforced plastic takes place at a temperature of at least 200°C and under a pressure of 500 - 1500 bar.

## Revendications

1. Machine électrique à flux axial, avec un rotor (1) sans fer en forme de disque disposé sur un arbre de machine (2) et présentant des aimants permanents (11) qui sont encastrés dans une matière plastique (12) renforcée par fibres ou par tissu, et avec un stator respectif (3, 4) de part et d'autre du rotor (1), **caractérisée en ce que** les aimants permanents (11) sont respectivement assemblés en engagement positif à la matière plastique (12) renforcée par fibres ou par tissu qui les entoure, et l'arbre de machine (2) avec deux brides (21, 22) de cet arbre de machine (2) est assemblé d'une manière stable au rotor (1) seulement par la matière plastique (12), et la matière plastique (12) forme conjointement avec les aimants permanents (11) et l'arbre de machine (2) un ensemble dimensionellement stable.

2. Machine électrique à flux axial selon la revendication 1, **caractérisée en ce que** plusieurs aimants permanents (11) sont disposés circulairement tout autour de l'arbre de machine (2), et la matière plastique (12) renforcée par fibres our par tissu, matière thermodurcissable notamment, s'étend entre les aimants permanents (11) globalement sur au moins 10% du cercle, die préférence entre 15% et 20%.

3. Machine électrique à flux axial selon la revendication 1 ou 2, **caractérisée en ce que** le rotor (1) présente sur sa circonférence extérieure ou à proximité de sa circonférence extérieure un bandage de renforcement (13) qui comprend un matériau fibreux pré-imprégné contenant de préférence des fibres de verre, de carbone ou de Kevlar, et le rotor (1) est de préférence réalisé en s'épaississant de l'intérieur vers l'extérieur aux fins de renforcement.

4. Machine électrique à flux axial selon l'une des revendications 1 à 3, **caractérisée en ce qu'**elle présente des moyens pour déterminer la position des pôles magnétiques du rotor (1), moyens qui comprennent de préférence une bande magnétique (14) disposée sur la circonférence extérieure du rotor (1) et formant une succession radialement magnétisée de pôles magnétiques respectivement disposés en correspondance avec les aimants permanents (11) encastrés dans la matière plastique (12) renforcée par fibres our par tissu, et des sondes de Hall (5) disposées stationnairement et coopérant avec ceux-ci.

5. Machine électrique à flux axial selon l'une des revendications 1 à 4, **caractérisée en ce que** la matière plastique (12) renforcée par fibres ou par tissu comprend une résine époxy ou une résine imide armée de fibres de verre, et de préférence en outre des substances minérales pour améliorer la dilatation thermique et la conduction thermique.

6. Machine électrique à flux axial selon l'une des revendications 1 à 5, **caractérisée en ce que** les aimants permanents (11) comprennent chacun au moins deux segments d'aimant séparés (111) juxtaposés en direction ciconférentielle, qui sont de préférence assemblés aus moyen d'une colle pour métaux.

7. Machine électrique à flux axial selon l'une des revendications 1 à 6, **caractérisée en ce que** les stators (3, 4) comprennent chacun une culasse annulaire (31, 41), dans laquelle sont pratiquées des rainures (32, 42) s'étendant approximativement radialement de l'intérieur vers l'extérieur, dans lesquelles sont guidés des bobinages polyphasés (33, 43).

8. Machine électrique à flux axial selon l'une des revendications 1 à 7, **caractérisée en ce que** les aimants permanents (11) ou les rainures (32, 42) sont biaisés en direction circonférentielle.

9. Machine électrique à flux axial selon l'une des revendications 1 à 8 **caractérisée en ce que** les deux stators (3, 4) sont électriquement décalés de 180° l'un par rapport à l'autre en direction circonférentielle, de sorte que les flux magnétiques correspondants sont orientés en sens contraires en direction circonférentielle dans le rotor (1) et s'annulent ainsi en fait au moins en majeure partie.

10. Procéde de fabrication d'un rotor (1) pour une machine électrique à flux axial selon l'une des revendications 1 à 9, **caractérisé en ce qu'**un arbre de machine (2) et des aimants permanents (11) sont disposés dans un moule, à la suite de quoi une matière plastique renforcée par fibres ou par tissu, préchauffée, est coulée sous pression dans le moule, qui est chauffé.

11. Procédé selon la revendication 10, **caractérisé en ce que** le coulage de la matière plastique renforcée par fibres ou par tissu s'effectue à une température d'au moins 200°C et sous une pression de 500 à 1500 bars.
